# EUROPEAN PATENT SPECIFICATION

(11) **EP 0 587 307 B1**
(45) Date of publication and mention of the grant of the patent: **27.12.1996**
(21) Application number: 93306243.2
(22) Date of filing: 06.08.1993
(51) Int. Cl.: C22C 21/14, B23K 1/00

(54) **Aluminium alloys**
Aluminium Legierungen
Alliages d'aluminium

(30) Priority: 28.08.1992 GB 9218404
(43) Date of publication of application: 16.03.1994
(73) Proprietor: GEC-MARCONI LIMITED, Stanmore, Middlesex HA7 4LY (GB)
(72) Inventor: Humpston, Giles, Quainton, Buckinghamshire, HP22 4AZ (GB); Jacobson, David Michael, Wembley, Middlesex, HA9 8LP (GB); Sangha, Surinder Pal Singh, Heston, Middlesex, TW5 9MH (GB)
(74) Representative: Cockayne, Gillian

(56) References cited:
- DE-A- 1 527 307
- SU-A- 1 770 432
- PATENT ABSTRACTS OF JAPAN vol. 16, no. 044 (M-1207)4 February 1992
- Week 9221, Derwent Publications Ltd., London, GB; AN 92-170625
- Week 8421, Derwent Publications Ltd., London, GB; AN 84-130029
- Week 1392, Derwent Publications Ltd., London, GB; AN 92-102541
- Week 8940, Derwent Publications Ltd., London, GB; AN 89-291163
- Week 8141, Derwent Publications Ltd., London, GB; AN 81-74801D

## Description

This invention relates to aluminium alloys which can be used for brazing components of aluminium alloys or the like.

Aluminium alloys and aluminium metal matrix composite materials are being used increasingly in a wide range of applications, particularly in aerospace, electronics and transportation. An incentive for this trend to continue is the attractive properties of engineering aluminium alloys which have a higher strength/weight ratio than steel and a higher conductivity/weight ratio than copper, while their low melting point facilitates the production of complex and intricate parts using near-net shape forming techniques.

However, the relatively low melting point of these alloys, renders most of them unbrazeable by existing technology. The known aluminium-silicon and aluminium-silicon-copper brazes can only be used for joining aluminium alloy components at brazing temperatures in the range of about 575° - 600°C. Lower brazing temperatures result in poor wetting and spread by the molten filler alloys while higher temperatures result in excessive erosion (dissolution) of the parent materials. Both of these phenomena give rise to inferior quality joints.

The alternative joining methods of mechanical fastening and adhesive bonding impose severe constraints on geometry, section thickness and suffer from inherent uncertainties about the integrity of the interface between the mating components.

The ability to join components of aluminium alloys by brazing with an aluminium alloy which can be used at a temperature lower than 575°C will represent a major technical achievement and enable the production of better functional designs of higher reliability. The current choice of braze is severely limited; binary alloys melting at lower temperatures have one or other major drawbacks that restrict their use. For example, they are either brittle, volatile, have poor fatigue properties or are particularly expensive due to a high gold content. GB 766368 and EP-A-0381411 disclose aluminium brazing alloys which contain germanium. These alloys melt at temperatures as low as 400°C. However, these aluminium-germanium alloys are exceptionally brittle.

Neither JP-A-3 248 777 nor JP-A-4 105 787 disclose an alloy for brazing which includes zinc to lower the melting temperature of the alloy.

Therefore there is a general need for new brazing alloys that mitigate these disadvantages and which are fully molten at a temperature lower than 575°C.

It is an object of the present invention to provide an aluminium alloy which can be used for brazing components of aluminium, aluminium alloys or the like material and is fully molten below 575°C.

According to the present invention there is provided an alloy as given in claim 1.

Alloys in this composition range melt at temperatures at least as low as 490°C.

The alloys of the present invention may be used for brazing components by applying a compressive stress to the braze while it is molten in the joint gap.

Optionally the alloy embodying the invention includes wetting and spreading agents. The concentration of each of said wetting and spreading agents in the alloy may be up to 0.25% by weight. Optionally the wetting agent is beryllium and the spreading agent is bismuth.

Further the alloy embodying the invention may include a grain refiner such as strontium for refining the grain structure of the solidified alloy. The concentration of such grain refiner when present in the alloy may be up to 0.25% by weight.

Further according to a preferred embodiment of the present invention there is provided an alloy consisting of:
a) from 50 to 85% by weight aluminium;
b) from 0 to 10% by weight zinc;
c) from 17 to 40% by weight copper;
d) from 0.25 to 5% by weight nickel;
e) from 1 to 8% by weight silicon;
f) from 0.001 to 0.25% by weight bismuth;
g) from 0.001 to 0.25% by weight beryllium; and
h) from 0.001 to 0.25% by weight strontium and which the sum of the above elements (a) to (h) in the alloy equal 100% by weight.

In the present invention the percentages of Al, Zn, Cu, Ni and Si are selected such that they provide a reasonable compromise between cost, melting range, the temperature at which the alloy is fully molten and ductility. The resultant alloy of the present invention has a low melting point, is sufficiently ductile and can be mechanically worked without causing any unnecessary fractures.

In the present invention more than 50% of aluminium concentrations are selected as this improves the mechanical properties of braze preforms, maintains electrochemical compatibility with aluminium alloy substrates and minimises the risk of bi-metallic corrosion. The upper limit of 85% is set by the need to restrict the melting range of brazes if they are to be useable at temperatures below 575°C. The partial substitution for the aluminium by up to 10% zinc is used to reduce the melting point of the alloy. Higher levels of zinc are unsuitable for brazing in furnaces owing to the volatile nature of this element.

High concentrations of copper are preferred as this element decreases the melting range of brazes. The upper limit of 40% is set by the embrittling effect produced by this element when it alloys with aluminium. Because copper in the absence of aluminium and silicon is ductile, multi-layer foils of the type Al-Si-Zn/Cu-Ni/Al-Si-Zn et.seq. are inherently ductile irrespective of the effective concentration of copper. Pastes incorporating powders of said alloys can be prepared with any concentration of copper. Further, the upper limit of copper is set by the need to maintain electrochemical compatibility between the solidified braze and the aluminium alloy components and which is progressively lost as the concentration of copper exceeds 40%. The lower limit of 17% of copper is set by the need to keep the melting range of alloys below 50°C, a characteristic that is beneficial in a braze.

In the present invention nickel is used to substitute for copper. An addition of 1% of nickel has the same effect for decreasing the melting range as about 5% of copper. There is an upper limit of about 5% nickel that is added in substitution for copper. The upper limit of 5% nickel is dictated by the severe embrittlement of the brazing alloys that occurs due to high concentration of nickel.

The addition of nickel is usually made to aluminium alloys in order to increase their hardness and improve their wear resistance, particularly in casting alloys. In the present invention it has been found that the substitution of copper by nickel at higher levels of copper not only decreases the melting range of the alloys but, provided the nickel addition is below 5% it also softens them. Softness and ductility are highly beneficial characteristics in brazing alloys since it enables foils and other preform geometrics to be produce easily by mechanical working methods. The substitition of 7% of copper in an alloy of composition 68Al 27Cu 5Si with 2% of nickel does not change greatly the melting range but decreases the hardness of the alloy by 50Hv.

High concentrations of silicon are preferred as this element depresses the melting point of aluminium but without adversely affecting either its electrochemical potential or mechanical properties. The upper limit is set by the need to avoid the formation of significant quantities of primary silicon phases in the alloy, which would embrittle it. About 5% silicon is the upper limit for alloys that can be mechanically worked by conventional methods and about 8% silicon for the other fabrication technologies, including multi-layer foils. The lower limit of silicon is set by the need to keep the melting range of brazes below 50°C.

Preferably the invention also provides for an alloy (B) consisting of:
a) 62.485% by weight aluminium;
b) 5% by weight zinc;
c) 27% by weight copper;
d) 1% by weight nickel;
e) 4% by weight silicon;
f) 0.25% by weight bismuth;
g) 0.25% by weight beryllium;
h) 0.015% by weight strontium.

The melting range of the alloy B is 485-513°C.

In the above example of the alloy embodying the present invention bismuth, beryllium and strontium are selected as an optimum combination from a range of well known elements that promote wetting and spreading of aluminium alloys and also refine the microstructure of solidified alloys. However, the alloy of the present invention may consist of aluminium, copper, nickel, zinc and silicon and in such case these incidental ingredients are not added to the alloy.

For the joining of non-aluminium components that are not prone to erosion by molten aluminium, such as molybdenum, brazing temperatures up to 720°C are occasionally used in order to achieve wetting. The alloys of the present invention could equally be used at these higher temperatures if required.

The low melting point alloys embodying the present invention maintain electromechanical compatibility between the solidified braze and the aluminium components. Further, the alloys of the present invention are sufficiently ductile and can be mechanically worked without causing any fractures or unnecessary embrittlement.

Homogeneous ingots of alloys embodying the invention can be readily prepared and converted into conventional geometries required for making brazed joints such as sheet, foil, rod, wire, powder and pastes.

Alloys embodying the invention with copper and silicon contents towards the lower end of the specified range, are more ductile and can be mechanically hot-worked to most desired geometries. When cold, these alloys have limited ductility and therefore intermediate annealing heat-treatment is necessary between reduction stages.

Alloy compositions of the present invention can be produced as both foil and wire by rapid solidification casting processes. The resulting material is relatively brittle but its ductility can be restored by heat treating it at a temperature close to the solidus temperature of the alloy, for about 24 hours in an inert atmosphere.

An alternative fabrication method, that can be used to make ductile preforms, is to divide the alloy into combinations of constituents that are ductile. For example, both Al-Zn-Si and Cu-Ni alloys are ductile within the specified ratios. Thus it is possible to prepare a laminated structure that contains the required constituents in the desired proportions and which is sufficiently ductile for it to be mechanically worked at room temperature without annealing. On heat-treatment at elevated temperature, the constituents interdiffuse to form a low melting point composition insitu. This heat treatment may simply comprise the brazing cycle.

The alloys of the present invention are treated to remove or destabilise surface films that accumulate during fabrication of the braze in order to make high quality joints. The alloys can be surface treated by one of the following method:
a) Mechanical abrasion of surface films: A thin layer of the alloy is stripped from the surface of the braze preforms. Any of the conventional means, such as rubbing with SiC impregnated papers, may be used to achieve this, although care should be taken to avoid aqueous and other media that will react with the freshly exposed aluminium surface.
b) Chemical etching: The surface layer of the braze may be chemically removed using reagents that are known to those 'skilled in the art'. For example, the multilayer preforms can be cleaned with warm NaOH followed by dilute HNO₃ when the surface layers are Al-Si or just dilute HNO₃, when the surface layers are Cu-Ni.
c) Vapour phase cleaning: Conventional vapour phase cleaning methods such as reverse-bias sputtering and fast atom bombardment can be used to achieve similar effect.

Irrespective of the cleaning method, a thin surface film will form when the braze is exposed to air. The film will impede flow by the molten braze. This can be overcome by either applying a compressive stress to the braze while it is molten in the joint gap, or coating the cleaned braze with a metallic layer that does not oxidise readily immediately following the cleaning operation. Nickel, silver and copper are suitable metals for this function and can be easily applied using both chemical and vapour phase processes. The metal layer needs to be sufficiently thick to ensure that it is pore free to avoid corrosion of the braze during storage prior to use.

The brazing cycle can be performed in both inert gas and high vacuum environments and involves heating the braze close to its liquidus temperature for sufficient time to obtain the desired extent of flow by the molten filler and depth of reaction with the substrates. It is generally beneficial to use the shortest possible brazing cycle time to minimise degradation of the parent materials.

### EXAMPLE

62.485A1 27Cu 1Ni 4Si 5Zn 0.25Bi 0.25Be 0.015Sr
Melting range 485-513°C

This alloy benefits from a narrower melting range and reduced melting point, due to the presence of zinc. A 5% addition of this element is sufficiently low so as not to contaminate furnaces owing to it relatively low vapour pressure.

## Claims

1. An alloy consisting of:
a) from 50 to 85% by weight aluminium;
b) from 17 to 40% by weight copper;
c) from 0.25 to 5% by weight nickel;
d) from 1 to 8% by weight silicon; and
e) 10% or less than 10% by weight zinc to lower the melting point of the alloy; and
f) optionally including from 0.001 to 0.25% by weight Bismuth; and from 0.001 to 0.25% by weight Beryllium; and from 0.001 to 0.25% by weight Strontium; and wherein the sum of the above elements (a) to (f) in the alloy equals 100% by weight.

2. An alloy as claimed in Claim 1, consisting of:
a) from 50 to 85% by weight aluminium;
b) from 17 to 40% by weight copper;
c) from 0.25 to 5% by weight nickel;
d) from 1 to 8% by weight silicon;
e) 10% or less than 10% by weight zinc;
f) from 0.001 to 0.25% by weight bismuth;
g) from 0.001 to 0.25% by weight beryllium; and
h) from 0.001 to 0.25% by weight strontium, and wherein the sum of the above elements (a) to (h) in the alloy equals 100% by weight.

3. An alloy as claimed in Claim 1, consisting of:
a) 62.485% by weight aluminium;
b) 5% by weight zinc;
c) 27% by weight copper;
d) 1% by weight nickel;
e) 4% by weight silicon;
f) 0.25% by weight bismuth;
g) 0.25% by weight beryllium;
h) 0.015% by weight strontium.

4. A foil or strip of an alloy as claimed in any one of the preceding claims, which is heat treated at 25 to 50°C below the melting point of the alloy in an inert atmosphere.

5. A foil or strip of any alloy as claimed in any one of Claims 1 to 3, which is surface treated electrochemically.

6. A foil or strip as claimed in Claim 5 including a layer of zinc provided thereon and a layer of copper, silver, nickel or combinations thereof provided on said zinc layer.

## Patentansprüche

1. Legierung, bestehend aus:
a) von 50 zu 85 Gew.-% Aluminium.
b) von 17 bis 40 Gew.-% Kupfer:
c) von 0,25 bis 5 Gew.-% Nickel,
d) von 1 bis 8 Gew.-% Silicium. und
e) 10 Gew.-% oder weniger als 10 Gew.-% Zink. um den Schmelzpunkt der Legierung zu erniedrigen, und
f) wahlweise enthaltend von 0,001 bis 0,25 Gew.-% Wismuth, und von 0,001 bis 0.25 Gew.-% Beryllium und von 0,001 bis 0,25 Gew.-% Strontium,
wobei die Summe der obigen Elemente (a) bis (f) in der Legierung 100 Gew.-% beträgt.

2. Legierung nach Anspruch 1, bestehend aus:
a) von 50 zu 85 Gew.-% Aluminium,
b) von 17 bis 40 Gew.-% Kupfer;
c) von 0,25 bis 5 Gew.-% Nickel,
d) von 1 bis 8 Gew.-% Silicium,
e) 10 Gew.-% oder weniger als 10 Gew.-% Zink,
f) von 0,001 bis 0,25 Gew.-% Wismuth,
g) von 0,001 bis 0,25 Gew.-% Beryllium und
h) von 0,001 bis 0,25 Gew.- Strontium.
wobei die Summe der obigen Elemente (a) bis (h) in der Legierung 100 Gew.-% beträgt.

3. Legierung, bestehend aus:
a) 62,485 Gew.-% Aluminium,
b) 5 Gew.-% Zink,
c) 27 Gew.-% Kupfer:
c) 1 Gew.-% Nickel,
d) 4 Gew.-% Silicium,
e) 0,25 Gew.-% Wismuth,
f) 0,25 Gew.-% Beryllium und
g) 0,015 Gew.- Strontium.

4. Folie oder Streifen aus einer Legierung nach einem der vorhergehenden Ansprüche, die/der in einer inerten Atmosphäre bei 25°C bis 50°C unterhalb des Schmelzpunktes der Legierung wärmebehandelt ist.

5. Folie oder Streifen aus einer Legierung nach einem der Ansprüche 1 bis 3, deren/dessen Oberfläche elektrochemisch behandelt ist.

6. Folie oder Streifen nach Anspruch 5, die/der eine auf ihm vorgesehene Schicht beinhaltet und eine Schicht aus Kupfer, Silber, Nickel oder Zusammensetzungen aus diesen, die auf der Zinkschicht vorgesehen sind.

## Revendications

1. Alliage constitué des éléments suivants :
a) 50 à 85 % en poids d'aluminium,
b) 17 à 40 % en poids de cuivre,
c) 0,25 à 5 % en poids de nickel,
d) 1 à 8 % en poids de silicium, et
e) 10 % ou moins de 10 % en poids de zinc destiné à réduire la température de fusion de l'alliage et
f) éventuellement, 0,001 à 0,25 % en poids de bismuth, 0,001 à 0,25 % en poids de béryllium et 0,001 à 0,25 % en poids de strontium, la somme des éléments précités (a) à (f) dans l'alliage étant égale à 100 % en poids.

2. Alliage selon la revendication 1, constitué des éléments suivants :
a) 50 à 85 % en poids d'aluminium,
b) 17 à 40 % en poids de cuivre,
c) 0,25 à 5 % en poids de nickel,
d) 1 à 8 % en poids de silicium,
e) 10 % ou moins de 10 % en poids de zinc,
f) 0,001 à 0,25 % en poids de bismuth,
g) 0,001 à 0,25 % en poids de béryllium, et
h) 0,001 à 0,25 % de strontium, et la somme des éléments précités (a) à (h) dans l'alliage est égale à 100 % en poids.

3. Alliage selon la revendication 1, constitué des éléments suivants :
a) 62,485 % en poids d'aluminium,
b) 5 % en poids de zinc,
c) 27 % en poids de cuivre,
d) 1 % en poids de nickel,
e) 4 % en poids de silicium,
f) 0,25 % en poids de bismuth,
g) 0,25 % en poids de béryllium, et
h) 0,015 % en poids de strontium.

4. Feuille ou bande d'un alliage selon l'une quelconque des revendications précédentes, qui est traité thermiquement à une température inférieure de 25 à 50 °C à la température de fusion de l'alliage en atmosphère inerte.

5. Feuille ou bande d'un alliage selon l'une quelconque des revendications 1 à 3, qui a subi un traitement électrochimique de surface.

6. Feuille ou bande selon la revendication 5, comprenant une couche de zinc placée à sa surface et une couche de cuivre, d'argent, de nickel ou d'une de leurs combinaisons placée sur la couche de zinc.
